# EUROPEAN PATENT SPECIFICATION

(11) **EP 4 552 472 B1**
(45) Date of publication and mention of the grant of the patent: **09.09.2026**
(21) Application number: 23208892.2
(22) Date of filing: 09.11.2023
(51) Int. Cl.: A01D 89/00, A01D 75/18

(54) **TRACKING WHEEL PROTECTION**
NACHLAUFRADSCHUTZ
PROTECTION DE ROUE DE SUIVI

(43) Date of publication of application: 14.05.2025
(73) Proprietor: CNH Industrial Belgium N.V., 8210 Zedelgem (BE)
(72) Inventor: Blancke, Jeffrey, 8210 Zedelgem (BE); Van Belleghem, Stijn, 8210 Zedelgem (BE); Beelaert, Simon, 8210 Zedelgem (BE)
(74) Representative: CNH Industrial IP Department

(56) References cited:
- EP-B1- 1 653 112
- DE-A1- 102022 105 847
- DE-U1- 29 713 081
- US-B1- 6 336 313

## Description

### TECHNICAL FIELD

The present invention relates to a pickup assembly for an agricultural harvester, the pickup assembly comprising a pickup assembly frame, a pickup unit carried by the pickup assembly frame and configured to pick up crop from a field, and a feeding auger, rotatably coupled to an auger arm, the auger arm being pivotably connected to the pickup assembly frame at a pivot axle. The pickup assembly further comprises wheels for supporting the pickup assembly as it moves along a surface. The present invention further relates to an agricultural harvester comprising such a pickup assembly.

### BACKGROUND

Certain agricultural machines, such as forage harvesters, forage wagons and balers, collect crop material that has been cut from the field. The component of such agricultural machines which gathers the crop material and feeds it further into the machine for processing is generally known as a pickup assembly. A pickup assembly comprises a pickup unit, typically in the form of a pickup drum rotatably mounted on the pickup assembly frame. The pickup drum has radially arranged projecting tines to collect the crop material and propel it upwards, past a guiding element, and then into a feeding auger that moves the crop laterally towards a feed channel through which the crop material is conveyed into the machine for subsequent processing. Such subsequent processing may, for example, involve baling, threshing, chopping, storing and/or depositing.

The effectiveness of crop pickup is directly affected by the height of the tines of the pickup drum above the ground, otherwise known as the running height. Too high, and the tines will not effectively gather all the crop, leaving some on the ground behind the forage harvester. Too low, and the pickup tines may collide with the ground increasing the load on the system and potentially overloading the pickup tines. Furthermore, bringing the tines too close to the ground may lead to the intake of sand or stones, thereby causing damage to many different parts of the pickup. Operation at the correct running height is thus essential to maximising operational efficiency.

Forage harvester pickup assemblies typically comprise a pair of tracking wheels located towards the front of the pickup assembly which contact the ground during operation of the forage harvester collecting crop. The tracking wheels are typically height adjustable so that the running height can be adjusted to take account of local ground variations and conditions.

Crop fields are rarely flat meaning forage harvesters must contend with undulations and localised bumps, dips and other obstacles. As the tracking wheels follow the ground surface during use, they encounter bumps, dips, stones and other objects which, when hit at speed, can result in very high forces on the tracking wheels. Such forces can result in damage to the tracking wheels themselves, or damage to the wheel support elements that attach the tracking wheels to the pickup assembly frame.

DE102022105847A1 discloses a swath pickup for attachment to a self-propelled harvesting machine comprises a frame adjustable between a lowered operating position and a raised out-of-service position by an actuator, on which a pickup rotor with tines for picking up crop from a field and a discharge conveyor attached downstream of the pickup rotor for transferring crop picked up by the pickup rotor into a feed housing of the harvesting machine are attached, and first and second support wheels which are each movable between an operating position in contact with the ground, in which they are positioned on opposite sides of the pickup rotor, and an out-of-service position, in which they are spaced away from the ground.

It is against this background that the present invention has been developed.

### SUMMARY OF THE INVENTION

According to an aspect of the invention there is provided a pickup assembly for an agricultural harvester, the pickup assembly comprising: a pickup assembly frame; a tracking wheel; and a tracking wheel support mechanism attached to the pickup assembly frame, wherein the tracking wheel support mechanism comprises a support arm and a support member, wherein the tracking wheel is rotatably connected to a distal end of the support arm, and wherein a proximal end of the support arm is rotatably connected to the support member about a support member axis which is parallel to the axis of rotation of the tracking wheel, wherein the support arm is restrained against rotation relative to the support member by a frangible member, wherein the frangible member is configured to break when exposed to a predetermined load condition such that the support arm is free to rotate relative to the support member.

The frangible connection between the support arm and the support member allows the tracking wheel to rotate out of the way of an obstruction on the ground such as a rock or ditch thereby avoiding damage to other parts of the pickup assembly such as the support member and/or support arms if the tracking wheel hits such an obstacle with sufficient force to break the frangible member.

Optionally the tracking wheel support mechanism comprises a pair of support arms, wherein the tracking wheel is rotatably connected to the distal ends of the support arms between the support arms, wherein the proximal ends of the support arms are rotatably connected to the support member about the support member axis, wherein the support arms are restrained against rotation relative to the support member by a frangible member which is configured to break when exposed to the predetermined load condition such that the support arms are free to rotate relative to the support member. The provision of support arms on each side of the tracking wheel provides greater stability for the tracking wheel in use.

A first one of the support arms may optionally be restrained against rotation relative to the support member by a first frangible member, and wherein a second one of the support arms is restrained against rotation relative to the support member by a second frangible member, wherein the first and second frangible members are configured to break when exposed to the predetermined load condition such that the support arms are free to rotate relative to the support member. The use of two frangible members may be beneficial in cases where access to the other support arm is limited. This may be beneficial if the proximal ends of the support arms are spaced apart and the support member extends between the proximal ends of the support arms.

In one example the support member may be rotatably connected to the pickup assembly frame about a pivot axis orthogonal to the support member axis to facilitate castoring of the tracking wheels.

Optionally the support member is connected to a support pin, wherein the support pin is rotatably connected to the pickup assembly frame about the pivot axis. The support pin may optionally be integrally formed with the support member to reduce part count.

The pickup assembly may comprise a pair of tracking wheels, wherein a first one of the tracking wheels is rotatably connected to a first tracking wheel support mechanism located on a first side of the pickup assembly frame, and wherein a second one of the tracking wheels is rotatably connected to a second tracking wheel support mechanism located on a second side of the pickup assembly frame. The provision of tracking wheels on each side of the pickup assembly frame provides enhanced stability for the pickup assembly in use.

According to another aspect of the invention there is provided an agricultural harvester comprising a pickup assembly as described above.

### BRIEF DESCRIPTION OF THE DRAWINGS

Embodiments of the invention will now be described by way of example with reference to the accompanying drawings, in which:
Figure 1 schematically shows a forage harvester with a pickup assembly that may embody one or more of the inventions described herein;
Figure 2 shows a perspective front view of a pickup assembly that may be used with the forage harvester of Figure 1; and
Figure 3 shows a partial perspective front view of a pickup assembly according to the present invention.

### DETAILED DESCRIPTION

In the following, a pickup assembly is described in which the above described invention may be advantageously used. In addition to the invention claimed in the appended claims, further improvements may be implemented in the same pickup assembly. It is noted that, while some features of these other improvements may appear essential in the context of those other improvements, it should not be concluded therefrom that such features are essential to the now claimed invention too. Similarly, it may be suggested that a feature essential for the currently claimed invention is merely optional in the context of the other possible improvements, which is not to be interpreted as an attempt to broaden the scope of protection beyond that what is claimed in the appended claims.

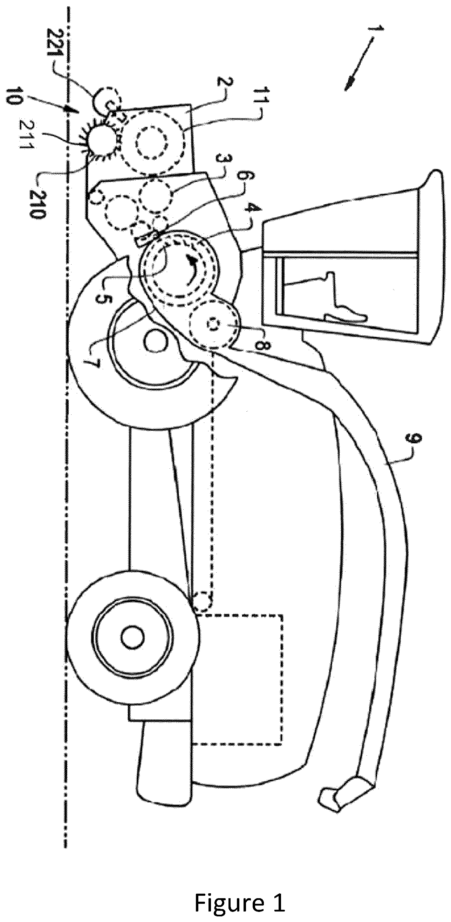

Figure 1 shows a schematic side view of an exemplary embodiment of an agricultural vehicle, illustrated in the form of a forage harvester 1. As the harvester 1 advances through a field, crops, e.g. grass or alfalfa, are gathered by a pickup assembly 2 and transported to a central crop inlet of the forage harvester 1 where they enter the harvester 1 through a set of feed rolls 3. The feed rolls 3 guide the crops in the form of a mat with a given thickness towards the cutting drum 4, which rotates in the direction indicated by the arrow, about a rotation axis that is transversal to the direction of movement of the crops. Knives 5 are mounted on and distributed along the full circumference of the drum 4, so that the knives 5 pass by a stationary shear bar 6 as the drum 4 rotates, thereby chopping the crops into small pieces which are further transported between the cutting drum 4 and a concave 7. The chopped material is then ejected by a blower 8 through a spout 9. It should be appreciated that while the agricultural vehicle is illustrated and described as a forage harvester 1, in some embodiments the pickup assembly may be used in combination with other agricultural vehicles such as a grass wagon, a combine harvester, or a baler, e.g., a large square baler, a small square baler, or a round baler.

The pickup assembly 2 comprises a pickup unit 10 that includes a pickup drum 210 that carries a plurality of tines 211. The pickup drum 210 is configured to rotate about a pickup axis that is transverse to the direction of movement of the harvester 1. The rotating tines 211 pick the crop material up from the ground and move it toward a crop material conveyor in the form of a feeding auger 11. The feeding auger 11 conveys the picked up crop material toward an inlet of the harvester 1, or to a central location where a separate conveyor conveys the crop material toward the interior of the harvester 1.

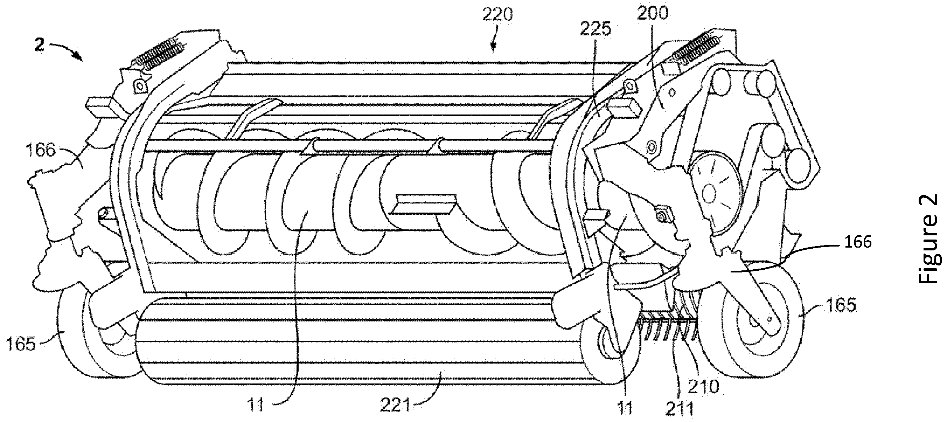

Figure 2 shows aspects of the pickup assembly 2 in further detail. The pickup assembly also includes a wind guard assembly 220. The wind guard assembly 220 may include a cylindrical roller 221, mounted between roller arms 225, which rotates during operation about a roller axis. Like the pickup axis, the roller axis is generally transverse to the direction of movement of the harvester 1. It should be appreciated that while the roller 221 is illustrated and described as a cylindrical roller 221, the roller 221 can be formed to have other shapes. The roller 221 may be a fixed roller, i.e., a roller that generally maintains a fixed position of the roller axis during operation, or an adjustable roller, i.e., a roller that can be appreciably re-positioned so the roller axis moves to accommodate for variations swath height.

The pickup drum 210, feeding auger 11, and wind guard assembly 220 are all carried by a pickup assembly frame 200 of the pickup assembly 2, as may other functional parts of the pickup assembly 2. Typically, the pickup assembly 2 is provided as a separate header that can be mounted to the front of the harvester 1 when needed. Alternatively, the pickup assembly 2 is fixedly attached to a chassis of the forage harvester 1.

A pair of height adjustable tracking wheels 165 are attached to the pickup assembly frame 200 by tracking wheel arms 166 which are pivotally attached to the pickup assembly frame 200 about a tracking wheel arm axis generally transverse to the direction of movement of the harvester 1.

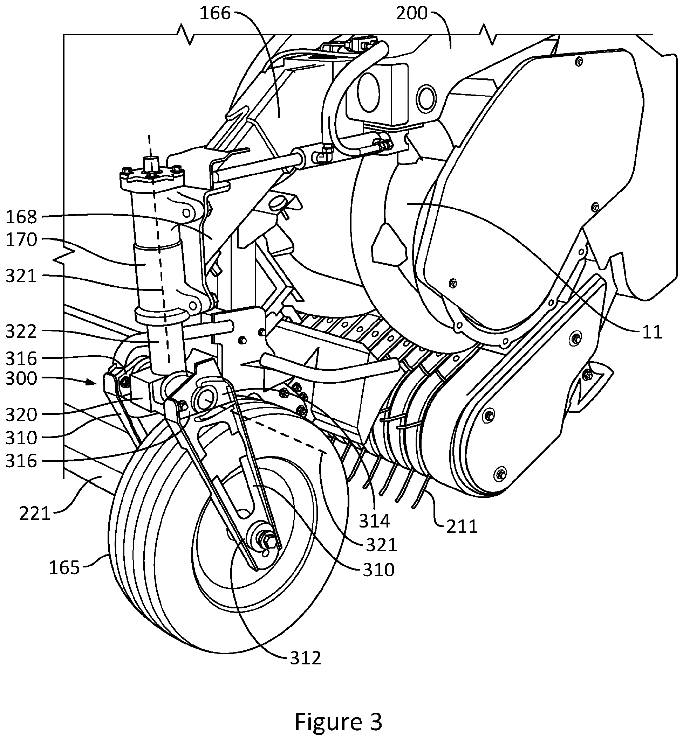

Figure 3 shows a more detailed view of one of the tracking wheels 165 attached to one side of the pickup assembly frame 200 via a tracking wheel support mechanism 300. A second tracking wheel 165 (not shown in Figure 3) is attached to the other side of the pickup assembly frame 200 by an equivalent tracking wheel support mechanism 300.

The tracking wheel support mechanism 300 comprises a pair of support arms 310 and a support member 320. The tracking wheel 165 is rotatably connected to the distal end 312 of each support arm 310 and located between the support arms 310. The proximal end 314 of each support arm 310 is rotatably connected to the support member 320 about a support member axis 321 which is parallel to the axis of rotation of the tracking wheel 165. The support member 320 extends between the support arms 310.

The support member is connected to a support pin 322 which is rotatably received within a sleeve 170 located at the distal end 168 of the tracking wheel arm 166. The support pin 322 is rotatable about a pivot axis 323 orthogonal to the support member axis 321. The support member 320 and the support pin 322 may be attached to one another, or the support member 320 and the support pin 322 may comprise an integral part.

During operation of the forage harvester 1 collecting crop from a field, the pickup assembly 200 is supported in an operational position such that the tracking wheels 165 contact the ground. The running height of the pickup unit 10 can be adjusted by adjusting the relative position of the tracking wheels 165 with respect to the pickup assembly frame 200 by pivoting the tracking wheel arms 166 in relation to the pickup assembly frame 200. Alternatively or additionally, the running height of the pickup unit 10 can be adjusted by adjusting the location of the support pins 322 with respect to the sleeve 170. The support pins 322 may be restrained against rotation about the pivot axis 323, or they may be free to rotate to allow castoring of the tracking wheels 165.

The distal end 314 of each support arm 310 is restrained against rotation relative to the support member 320 by a frangible member 316. The frangible members 316 are configured to break when exposed to a predetermined load condition such that the support arms 310 are free to rotate relative to the support member 320. The predetermined load condition is selected so that the frangible members 316 will break if a load equal to or above a predetermined load is experienced during use of the harvester 1. Such a load may be experienced, for example, if the tracking wheel 165 hits a rock or ditch as the harvester 1 moves forward.

The frangible members 316 may be in the form of a pin or bolt which has a area or line of weakness formed therein. Other methos of providing a frangible connection between the support arms 310 and the support member 320 are known in the art.

In an alternative example, a single frangible member 316 may be used to fix both support arms 310 to the support member 320 to prevent relative rotation therebetween.

## Claims

1. A pickup assembly (2) for an agricultural harvester (1), the pickup assembly (2) comprising:
a pickup assembly frame (200);
a tracking wheel (165); and
a tracking wheel support mechanism (300) attached to the pickup assembly frame (200), wherein the tracking wheel support mechanism (300) comprises a support arm (310) and a support member (320), wherein the tracking wheel (165) is rotatably connected to a distal end (312) of the support arm (310), and wherein a proximal end (314) of the support arm (310) is rotatably connected to the support member (320) about a support member axis (321) which is parallel to the axis of rotation of the tracking wheel (165),
**characterized in that**
the support arm (310) is restrained against rotation relative to the support member (320) by a frangible member (316), wherein the frangible member (316) is configured to break when exposed to a predetermined load condition such that the support arm (310) is free to rotate relative to the support member (320).

2. The pickup assembly (2) of claim 1, wherein the tracking wheel support mechanism (300) comprises a pair of support arms (310), wherein the tracking wheel (165) is rotatably connected to the distal ends (312) of the support arms (310) between the support arms (310), wherein the proximal ends (314) of the support arms (310) are rotatably connected to the support member (320) about the support member axis (321), wherein the support arms (310) are restrained against rotation relative to the support member (320) by a frangible member (316) which is configured to break when exposed to the predetermined load condition such that the support arms (310) are free to rotate relative to the support member (320).

3. The pickup assembly (2) of claim 2, wherein a first one of the support arms (310) is restrained against rotation relative to the support member (320) by a first frangible member (316), and wherein a second one of the support arms (310) is restrained against rotation relative to the support member (320) by a second frangible member (316), wherein the first and second frangible members (316) are configured to break when exposed to the predetermined load condition such that the support arms (310) are free to rotate relative to the support member (320).

4. The pickup assembly (2) of claim 2 or claim 3, wherein the proximal ends (314) of the support arms (310) are spaced apart, and wherein the support member (320) extends between the proximal ends (314) of the support arms (310).

5. The pickup assembly (2) of any preceding claim, wherein the support member (310) is rotatably connected to the pickup assembly frame (200) about a pivot axis (323) orthogonal to the support member axis (321).

6. The pickup assembly (2) of claim 5, wherein the support member (320) is connected to a support pin (322), wherein the support pin (322) is rotatably connected to the pickup assembly frame (200) about the pivot axis (323).

7. The pickup assembly (2) of claim 5, wherein the support pin (322) is integrally formed with the support member (320).

8. The pickup assembly (2) of any preceding claim, comprising a pair of tracking wheels (165), wherein a first one of the tracking wheels (165) is rotatably connected to a first tracking wheel support mechanism (300) located on a first side of the pickup assembly frame (200), and wherein a second one of the tracking wheels (165) is rotatably connected to a second tracking wheel support mechanism (300) located on a second side of the pickup assembly frame (200).

9. An agricultural harvester (1) comprising a pickup assembly (2) as claimed in any of the preceding claims.

## Patentansprüche

1. Aufnahmeanordnung (2) für eine landwirtschaftliche Erntemaschine (1), wobei die Aufnahmeanordnung (2) umfasst:
einen Aufnahmeanordnungsrahmen (200);
ein Spurrad (165) und
einen Spurradstützmechanismus (300), der an dem Aufnahmeanordnungsrahmen (200) befestigt ist, wobei der Spurradstützmechanismus (300) einen Stützarm (310) und ein Stützelement (320) umfasst, wobei das Spurrad (165) drehbar mit einem distalen Ende (312) des Stützarms (310) verbunden ist und wobei ein proximales Ende (314) des Stützarms (310) mit dem Stützelement (320) um eine Stützelementachse (321) drehbar verbunden ist, die parallel zu der Drehachse des Spurrads (165) verläuft, **dadurch gekennzeichnet, dass**
der Stützarm (310) durch ein Sollbruchelement (316) an einer Drehung relativ zu dem Stützelement (320) gehindert wird, wobei das Sollbruchelement (316) konfiguriert ist, um zu brechen, wenn es einem vorbestimmten Lastzustand ausgesetzt wird, sodass der Stützarm (310) sich frei relativ zu dem Stützelement (320) drehen kann.

2. Aufnahmeanordnung (2) nach Anspruch 1, wobei der Spurradstützmechanismus (300) ein Paar von Stützarmen (310) umfasst, wobei das Spurrad (165) drehbar mit den distalen Enden (312) der Stützarme (310) zwischen den Stützarmen (310) verbunden ist, wobei die proximalen Enden (314) der Stützarme (310) um die Stützelementachse (321) drehbar mit dem Stützelement (320) verbunden sind, wobei die Stützarme (310) gegen eine Drehung relativ zu dem Stützelement (320) durch ein Sollbruchelement (316) gesichert sind, das konfiguriert ist, um zu brechen, wenn es dem vorbestimmten Lastzustand ausgesetzt ist, sodass die Stützarme (310) relativ zu dem Stützelement (320) frei drehbar sind.

3. Aufnahmeanordnung (2) nach Anspruch 2, wobei ein erster der Stützarme (310) durch ein erstes Sollbruchelement (316) gegen eine Drehung relativ zu dem Stützelement (320) zurückgehalten wird und wobei ein zweiter der Stützarme (310) durch ein zweites Sollbruchelement (316) gegen eine Drehung relativ zu dem Stützelement (320) gesichert wird, wobei das erste und das zweite Sollbruchelement (316) konfiguriert sind, um zu brechen, wenn sie dem vorbestimmten Lastzustand ausgesetzt sind, sodass die Stützarme (310) relativ zu dem Stützelement (320) frei drehbar sind.

4. Aufnahmeanordnung (2) nach Anspruch 2 oder Anspruch 3, wobei die proximalen Enden (314) der Stützarme (310) beabstandet sind und wobei sich das Stützelement (320) zwischen den proximalen Enden (314) der Stützarme (310) erstreckt.

5. Aufnahmeanordnung (2) nach einem der vorstehenden Ansprüche, wobei das Stützelement (310) um eine Schwenkachse (323) orthogonal zu der Stützelementachse (321) drehbar mit dem Aufnahmeanordnungsrahmen (200) verbunden ist.

6. Aufnahmeanordnung (2) nach Anspruch 5, wobei das Stützelement (320) mit einem Stützstift (322) verbunden ist, wobei der Stützstift (322) um die Schwenkachse (323) drehbar mit dem Aufnahmeanordnungsrahmen (200) verbunden ist.

7. Aufnahmeanordnung (2) nach Anspruch 5, wobei der Stützstift (322) einstückig mit dem Stützelement (320) ausgebildet ist.

8. Aufnahmeanordnung (2) nach einem der vorstehenden Ansprüche, umfassend ein Paar Spurräder (165), wobei ein erstes der Spurräder (165) drehbar mit einem ersten Spurradstützmechanismus (300) verbunden ist, der an einer ersten Seite des Aufnahmeanordnungsrahmens (200) angeordnet ist, und wobei ein zweites der Spurräder (165) drehbar mit einem zweiten Spurradstützmechanismus (300) verbunden ist, der an einer zweiten Seite des Aufnahmeanordnungsrahmens (200) angeordnet ist.

9. Landwirtschaftliche Erntemaschine (1), umfassend eine Aufnahmeanordnung (2) nach einem der vorstehenden Ansprüche.

## Revendications

1. Ensemble de ramassage (2) pour une récolteuse agricole (1), l'ensemble de ramassage (2) comprenant :
un bâti d'ensemble de ramassage (200) ;
une roue de guidage (165) ; et
un mécanisme de support de roue de guidage (300) fixé au bâti d'ensemble de ramassage (200), dans lequel le mécanisme de support de roue de guidage (300) comprend un bras de support (310) et un élément de support (320), dans lequel la roue de guidage (165) est reliée de manière rotative à une extrémité distale (312) du bras de support (310), et dans lequel une extrémité proximale (314) du bras de support (310) est reliée de manière rotative à l'élément de support (320) autour d'un axe d'élément de support (321) qui est parallèle à l'axe de rotation de la roue de guidage (165),
**caractérisé en ce que**
le bras de support (310) est retenu à l'encontre d'une rotation par rapport à l'élément de support (320) par un élément frangible (316), dans lequel l'élément frangible (316) est conçu pour se briser lorsqu'il est exposé à une condition de charge prédéterminée, de telle sorte que le bras de support (310) est libre de tourner par rapport à l'élément de support (320).

2. Ensemble de ramassage (2) selon la revendication 1, dans lequel le mécanisme de support de roue de guidage (300) comprend une paire de bras de support (310), dans lequel la roue de guidage (165) est reliée de manière rotative aux extrémités distales (312) des bras de support (310) entre les bras de support (310), dans lequel les extrémités proximales (314) des bras de support (310) sont reliées de manière rotative à l'élément de support (320) autour de l'axe d'élément de support (321), dans lequel les bras de support (310) sont retenus à l'encontre d'une rotation par rapport à l'élément de support (320) par un élément frangible (316) qui est conçu pour se briser lorsqu'il est exposé à la condition de charge prédéterminée, de telle sorte que les bras de support (310) sont libres de tourner par rapport à l'élément de support (320).

3. Ensemble de ramassage (2) selon la revendication 2, dans lequel un premier des bras de support (310) est retenu à l'encontre d'une rotation par rapport à l'élément de support (320) par un premier élément frangible (316), et dans lequel un second bras parmi les bras de support (310) est retenu à l'encontre d'une rotation par rapport à l'élément de support (320) par un second élément frangible (316), dans lequel les premier et second éléments frangibles (316) sont conçus pour se briser lorsqu'ils sont exposés à la condition de charge prédéterminée, de telle sorte que les bras de support (310) sont libres de tourner par rapport à l'élément de support (320).

4. Ensemble de ramassage (2) selon la revendication 2 ou la revendication 3, dans lequel les extrémités proximales (314) des bras de support (310) sont espacées, et dans lequel l'élément de support (320) s'étend entre les extrémités proximales (314) des bras de support (310).

5. Ensemble de ramassage (2) selon une quelconque revendication précédente, dans lequel l'élément de support (310) est relié de manière rotative au bâti d'ensemble de ramassage (200) autour d'un axe de pivotement (323) orthogonal à l'axe d'élément de support (321).

6. Ensemble de ramassage (2) selon la revendication 5, dans lequel l'élément de support (320) est relié à une tige de support (322), dans lequel la tige de support (322) est reliée de manière rotative au bâti d'ensemble de ramassage (200) autour de l'axe de pivotement (323).

7. Ensemble de ramassage (2) selon la revendication 5, dans lequel la tige de support (322) est formée d'un seul tenant avec l'élément de support (320).

8. Ensemble de ramassage (2) selon une quelconque revendication précédente, comprenant une paire de roues de guidage (165), dans lequel une première des roues de guidage (165) est reliée de manière rotative à un premier mécanisme de support de roue de guidage (300) situé sur un premier côté du bâti d'ensemble de ramassage (200), et dans lequel une seconde roue parmi les roues de guidage (165) est reliée de manière rotative à un second mécanisme de support de roue de guidage (300) situé sur un second côté du bâti d'ensemble de ramassage (200).

9. Récolteuse agricole (1) comprenant un ensemble de ramassage (2) selon l'une quelconque des revendications précédentes.
